# DEMANDE DE BREVET EUROPEEN

(11) **EP 3 586 667 A1**
(43) Date de publication de la demande: **01.01.2020**
(21) Numéro de dépôt: 18305842.9
(22) Date de dépôt: 29.06.2018
(51) Int. Cl.: A45B 19/02, A45B 11/00, A45B 11/02, A45B 25/18

(54) **PARAPLUIE AMÉLIORÉ**

(71) Demandeur: INSIDE production, 95000 Cergy (FR)
(72) Inventeur: Colson, Jacques, 95430 Auvers-sur-Oise (FR)
(74) Mandataire: Gauchet, Fabien Roland

(57) **Abrégé**

Le parapluie (1) comporte une armature (10,20), un ensemble de toiles (5) s'étendant sur l'armature, un moyen de préhension (15) pour porter le parapluie en position ouverte, au moins une (501,502) des toiles de l'ensemble de toiles comportant des moyens de traitement d'un rayonnement solaire.

## Description

### DOMAINE TECHNIQUE DE L'INVENTION

L'invention concerne des améliorations apportées aux parapluies et dispositifs assimilés.

### ETAT DE LA TECHNIQUE ANTERIEURE

Actuellement, les parapluies existants comportent, dans une première famille, une armature pliable, par exemple une armature métallique. Un inconvénient de cette première famille provient du fait qu'il est nécessaire de faire un compromis entre une solution légère mais peu résistante et une solution plus fiable mais encombrante. En effet, les parapluies légers ont tendance à se retourner lorsqu'il y a du vent et les parapluies plus robustes sont généralement plus encombrants, soit parce qu'ils sont plus longs, soit parce que l'armature est fragile. De plus, le design de tels parapluies ne permet pas d'offrir de formes particulières autres que la forme généralement connue d'un cône dont l'angle très ouvert permet de se protéger de la pluie tout en évacuant l'eau de pluie sur les bords de la toile.

Une deuxième famille de parapluies existante concerne les parapluies gonflables. Ces derniers sont légers et leur forme gonflée permet généralement de résister aux vents. En outre, n'importe quelle forme peut être proposée puisqu'aucun mécanisme de pliage n'impose une cinématique particulière au parapluie. En revanche, ils présentent un inconvénient dissuasif quant à leur utilisation : ils doivent être gonflés préalablement à leur utilisation. Une solution à cet inconvénient est décrite dans le document FR3051637.

Toutefois, de tels parapluies ne présentent pas un confort optimal pour son utilisateur, en particulier vis-à-vis de la luminosité et de l'utilisation d'éventuels équipements électriques et/ou électroniques du parapluie.

### EXPOSE DE L'INVENTION

Un but de l'invention est de fournir un parapluie qui offre un plus grand confort d'utilisation.

A cette fin, il est prévu, selon l'invention un parapluie comportant une armature, un ensemble de toiles s'étendant sur l'armature, un moyen de préhension pour porter le parapluie en position ouverte, au moins une des toiles de l'ensemble de toiles comportant des moyens de traitement d'un rayonnement solaire.

Avantageusement, mais facultativement, le parapluie selon l'invention présente au moins l'une des caractéristiques techniques suivantes :
- les moyens de traitement d'un rayonnement solaire sont positionnés en sandwich entre deux films formant l'au moins une des toiles de l'ensemble de toiles ;
- les moyens de traitement d'un rayonnement solaire comprennent un film photochromique ;
- le film photochromique est positionné au niveau d'une toile située devant un utilisateur du parapluie ;
- le film photochromique est positionné au niveau d'une toile formant un sommet du parapluie ;
- le film photochromique est positionné au niveau de toutes les toiles formant l'ensemble de toiles ;
- les moyens de traitement d'un rayonnement solaire comprennent un film photovoltaïque ;
- le film photovoltaïque est positionné au niveau d'une toile située derrière un utilisateur du parapluie ;
- le film photovoltaïque est positionné au niveau d'une toile formant un sommet du parapluie ;
- le parapluie comporte un moyen pour porter en mains libres le parapluie en position ouverte ;
- le moyen pour porter en mains libres le parapluie comporte un appui épaule ;
- le parapluie comporte un moyen de détection d'obstacle ;
- le moyen de détection d'obstacle est une caméra ;
- l'armature est une armature gonflable ; et,
- le parapluie comporte un micro-compresseur activable agencé de sorte à injecter un volume d'air dans l'armature gonflable.

### BREVE DESCRIPTION DES FIGURES

D'autres caractéristiques et avantages de l'invention ressortiront à la lecture de la description qui suit d'un mode de réalisation de l'invention. Aux dessins annexés :
- la figure 1 est une vue en trois dimensions d'un parapluie selon l'invention en position ouverte et porté par un utilisateur;
- la figure 2 est une vue en trois dimensions du parapluie selon un mode de réalisation de l'invention ;
- la figure 3 est une vue de côté d'un élément de préhension du parapluie selon l'invention ;
- la figure 4 est une vue partielle tridimensionnelle d'un élément de préhension maintenu dans le parapluie selon l'invention ;
- la figure 5 est une vue partielle en trois dimensions d'un élément de préhension fixé sur une partie inférieure du parapluie selon l'invention ;
- la figure 6 est une vue partielle de côté illustrant un exemple d'élément de préhension comportant un bouton activable pour engager un gonflage du parapluie selon l'invention par un mouvement du pouce ;
- la figure 7 est une vue en trois dimensions du parapluie selon une variante de réalisation de l'invention ; et,
- la figure 8 est une vue en trois dimensions du parapluie selon une autre variante de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

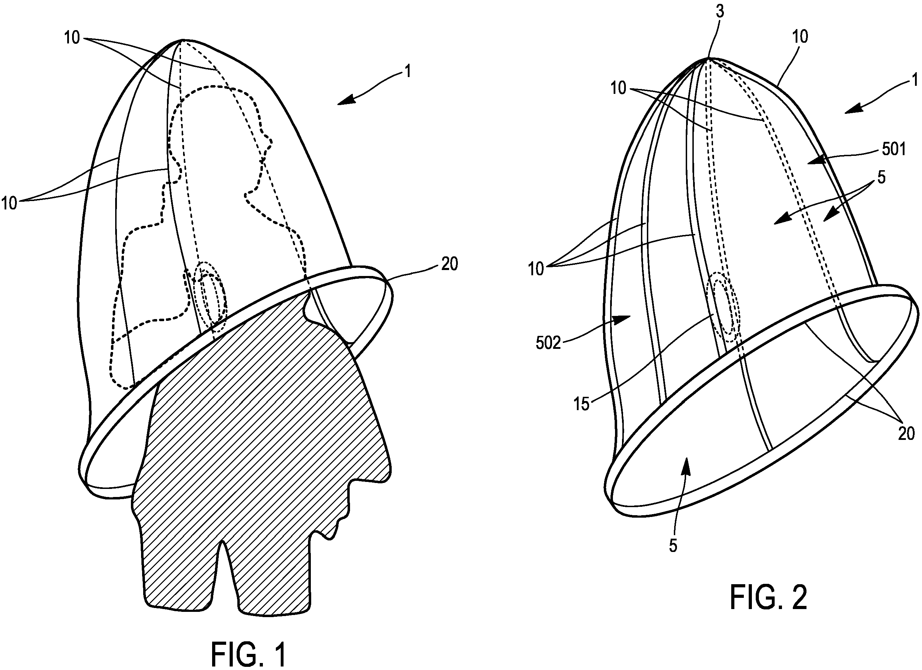

En référence à la figure 1, il est représenté un mode de réalisation d'un parapluie 1 selon l'invention dans une position ouverte et porté par un utilisateur. Le parapluie 1 selon l'invention présente, dans cette position ouverte, une forme d'ogive permettant d'immerger un utilisateur dans un environnement sec et présentant une protection contre la pluie, le vent ainsi que la grêle. Il est possible que le parapluie 1 selon l'invention présente des formes différentes, tout du moins, en position ouverte. Toutefois, selon ces différents modes de réalisation, la forme générale du parapluie 1 selon l'invention est compatible d'une forme convexe formant des portions arrondies sur la surface extérieure du parapluie.

Le parapluie 1 selon l'invention est, ici, un parapluie gonflable. Un tel parapluie gonflable permet de proposer une grande variété de formes répondant à des critères de goûts, de design ou de forme aérodynamique pour écarter le plus efficacement possible les gouttes de pluie rebondissant sur le parapluie 1 selon l'invention en position ouverte. Le parapluie 1 selon l'invention tel qu'illustré à la figure 1 représente un mode de réalisation dont la forme offre une élégance, un aspect pratique ainsi qu'une bonne protection. Ce parapluie est décrit en détails dans le document FR 3 051 637 auquel il est possible de se référer pour de plus amples informations. Toutefois, pour plus de compréhension, une partie de ces informations sont rappelées ci-après.

Le parapluie 1 selon l'invention comprend, dans la version gonflable ici illustrée, une base gonflable 20 servant d'armature circonférentielle ainsi que des arceaux gonflables 10, également appelés arcs 10, et formant en quelque sorte des méridiens sur la structure du parapluie 1 selon l'invention en position ouverte gonflée. Les arcs 10 servent d'armature longitudinale s'étendant entre la base 20 et un sommet 3 du parapluie 1 selon l'invention.

Selon un mode de réalisation, au moins un arc est formé par un arc rigide 101 comportant un moyen de préhension 15. L'arc rigide 101 peut être de forme tubulaire, de section circulaire ou ellipsoïdale. Selon un autre mode de réalisation, l'arc rigide 101 présente une section en forme de « U ».

L'ensemble des arcs 10 et de la base 20 peut former une unique chambre à air. Dans ce mode de réalisation, les arcs 10 comprennent chacun une jonction permettant de faire circuler un volume d'air entre eux et avec la base 20. Selon une première variante, l'air circule entre les arcs par le sommet 3.

**Selon** une seconde variante, l'air circule entre les arcs par l'intermédiaire de leur jonction avec la base 20. Dans ce dernier cas, l'air circule entre chaque arc 10 et la base 20, la base 20 formant un élément commun de passage de l'air pour le gonflage et le dégonflage du parapluie 1 selon l'invention.

Selon différents modes de réalisation, le parapluie 1 selon l'invention peut comporter un nombre donné d'arcs 10. Le nombre d'arcs 10 est choisi de sorte à offrir une structure robuste, harmonieuse et permettant de définir un espace intérieur qui soit le plus agréable possible pour un utilisateur. La présence de l'arc rigide 101, permet de rigidifier la structure et de maintenir une forme générale au parapluie 1 selon l'invention notamment à l'endroit où l'utilisateur le tient.

Selon une variante de réalisation, l'arc rigide 101 est un arc télescopique qui peut s'étendre sous une action particulière de l'utilisateur.

Selon un mode de réalisation illustré à la figure 2, le parapluie 1 selon l'invention comporte un ensemble de toiles 5 dont au moins une toile est transparente. Selon une variante de réalisation, toutes les toiles de l'ensemble de toiles 5 sont opaques de sorte à former une ombrelle. L'invention concerne donc outre un parapluie, une ombrelle. Dans la suite de la description, l'exemple du parapluie est détaillé, mais tous les aspects de l'invention s'appliquent également à l'ombrelle.

L'ensemble des toiles 5 forme une toile globale donnant la forme générale du parapluie 1 selon l'invention lorsqu'il est en position ouverte. A cette fin, selon une forme de réalisation, les toiles de l'ensemble de toiles 5 sont assemblées de manière à former une unique toile. L'assemblage peut être réalisé de différentes manières comme, par exemple, par collage ou par thermocollage ou par électro-soudage.

La toile globale recouvre la totalité du parapluie 1 selon l'invention et permet de lier les arcs 10,101 entre eux ainsi qu'avec la base 20. Les arcs 10,101 sont réunis au niveau du sommet 3 des arcs 10,101 et sont joints à la base 20.

La toile globale formée par l'ensemble des toiles 5 est agencée de sorte à ce que chacune des toiles de l'ensemble des toiles 5 est assemblée entre deux arcs 10 adjacents et la base 20. Cet assemblage est réalisé par exemple par électro-soudage aux arcs 10,101 ou à la base 20.

Selon une variante de réalisation, l'ensemble des toiles 5 du parapluie 1 selon l'invention est fabriquée par superposition de deux toiles ou films thermocollés. Elle peut être fabriquée en une seule pièce ou en plusieurs pièces. Lors de l'opération de thermocollage des deux toiles ou films l'une sur l'autre, des éléments longitudinaux rigides, encore appelés des tiges de pré-positionnement, sont insérés entre les deux toiles pour former les arcs gonflables 10. Ils sont ensuite retirés pour laisser apparaitre un volume d'air. Dans ce cas de figure, les arcs gonflables 10 sont formés par la superposition de deux films laissant un intervalle longitudinal le long de la toile formant sensiblement un bourrelet.

Selon une variante de réalisation, le parapluie 1 selon l'invention présente une forme générale symétrique selon un axe de révolution. Selon une autre variante de réalisation, le parapluie 1 selon l'invention présente une forme ayant des dissymétries selon un axe de révolution. C'est le cas du parapluie représenté ici sur les figures.

La dissymétrie de cette dernière variante de réalisation permet de définir une partie 501, frontale, formant l'avant du parapluie 1 et une partie 502 formant l'arrière.

La partie frontale du parapluie 1 selon l'invention est notée 501 sur la figure 2. Elle correspond donc à l'avant du parapluie 1 selon l'invention, c'est à dire à la partie qui sera en vis-à-vis de la tête d'un utilisateur lorsqu'il marche en tenant le parapluie 1 selon l'invention. Cette partie est préférentiellement transparente, au moins partiellement, pour qu'un utilisateur puisse voir au travers de la toile formant la partie 501 et ainsi éviter les obstacles ou les autres passants.

Selon une variante de réalisation, la toile globale est entièrement transparente.

Selon un mode de réalisation de l'invention, au moins l'une des toiles de l'ensemble de toiles 5 comporte des moyens de traitement d'un rayonnement solaire.

Selon une première variante de réalisation, les moyens de traitement d'un rayonnement solaire comprennent un film photochromique positionné sur la ou les toiles de l'ensemble des toiles 5 qui sont transparentes. Cela permet de filtrer la lumière qui traverse cette ou ces toiles transparentes de manière dynamique, c'est-à-dire en fonction de la luminosité, afin d'améliorer le confort visuel de l'utilisateur du parapluie 1 selon l'invention. En particulier, la toile formant la partie avant 501 transparente comporte un tel film photochromique dans cette variante de réalisation du parapluie 1 selon l'invention. Dans une autre variante de réalisation, le parapluie 1 selon l'invention comporte une toile 503 de sommet de l'ensemble de toiles 5 s'étendant autour du sommet 3 du parapluie 1 selon l'invention. Cette toile 503 de sommet est reliée aux autres toiles de l'ensemble de toiles 5 par un assemblage 504 réalisé de différentes manières comme, par exemple, par collage ou par thermocollage ou par électro-soudage. La toile 503 de sommet comporte le film photochromique. Dans une autre variante encore de réalisation, où toutes les toiles de l'ensemble de toiles 5 sont transparentes, le film photochromique est positionné au niveau de toutes ces toiles.

Dans le cas où les toiles sont formées par superposition de deux toiles ou films thermocollés, le film photochromique formant les moyens de traitement d'un rayonnement solaire est pris en sandwich entre les deux films ou toiles.

Selon une deuxième variante de réalisation, les moyens de traitement d'un rayonnement solaire comprennent un film photovoltaïque. Le film photovoltaïque comporte une couche de cellules photovoltaïques qui peuvent être rapportées sur une toile ou un film transparent ou non. Cela permet d'avoir une source d'énergie pour alimenter des éventuels équipements électriques et/ou électroniques équipant le parapluie 1 selon l'invention. En particulier, la toile 502 formant la partie arrière transparente ou non du parapluie 1 selon l'invention comporte un tel film photovoltaïque dans cette variante de réalisation d'un parapluie 1 selon l'invention. Dans une autre variante de réalisation, le parapluie 1 selon l'invention comporte une toile 503 de sommet de l'ensemble de toiles 5. Cette toile 503 de sommet est reliée aux autres toiles de l'ensemble de toiles 5 par un assemblage 504 réalisé de différentes manières comme, par exemple, par collage ou par thermocollage ou par électro-soudage. La toile 503 de sommet comporte le film photovoltaïque.

De nouveau, dans le cas où les toiles sont formées par superposition de deux toiles ou films thermocollés, le film photovoltaïque formant les moyens de traitement d'un rayonnement solaire est pris en sandwich entre les deux films ou toiles, sous-entendu que le film ou toile externe est transparente pour que la lumière atteigne le film photovoltaïque.

Selon une variante de réalisation, le parapluie 1 selon l'invention est conçu pour présenter une forme s'étendant sous les épaules d'une personne ou encore sous sa poitrine.

Nous allons maintenant décrire l'élément de préhension 15 du parapluie 1 selon l'invention.

Selon un premier mode de réalisation, l'élément de préhension 15 est fixé à l'un 101 des arceaux 10,101 du parapluie 1 selon l'invention. L'élément de préhension 15 est, ici, agencé à proximité de la base 20 de sorte à bénéficier de la rigidité de la structure au niveau de sa base circonférentielle 20.

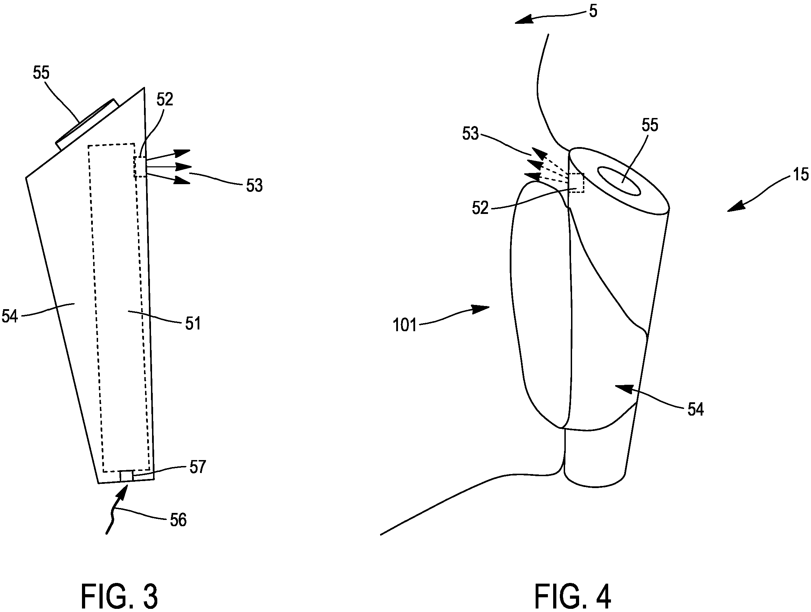

Ici illustré, l'élément de préhension 15 comprend un bâti 54 dans lequel un micro-compresseur 51 est agencé. La figure 3 offre une représentation d'un mode de réalisation d'un tel élément de préhension 15. L'élément de préhension 15 forme une poignée et peut donc être conçu pour qu'une main puisse le saisir.

Selon une variante de réalisation, l'élément de préhension 15 comporte un bâti 54 comprenant un grip. L'élément de préhension 15 peut se définir comme un élément sensiblement de forme cylindrique qui comporte des aspérités ou une géométrie adaptées pour son maintien dans une main.

L'élément de préhension 15 peut comporter une ouverture (non représentée) et un premier logement pour y agencer un micro-compresseur 51. L'ouverture permet le passage du micro-compresseur 51. Un premier capot peut être prévu pour maintenir à l'intérieur du bâti 54 l'élément de préhension 15.

Une alimentation du micro compresseur 51 est intégrée dans l'élément de préhension 15, à l'intérieur du bâti 54. Selon une variante, un deuxième logement dans le bâti 54 est conçu pour y insérer l'alimentation du micro-compresseur 51. Le deuxième logement peut être accessible par l'intermédiaire d'une ouverture comportant, par exemple, un second capot démontable. Alternativement, le micro-compresseur 51 et son alimentation peuvent être agencés dans un même logement par l'intermédiaire d'une unique ouverture. L'alimentation peut être une batterie rechargeable, ou des piles.

Dans le cas d'une alimentation comportant des batteries rechargeable, ces dernières peuvent être connectées électriquement aux cellules photovoltaïques du film photovoltaïque formant les moyens de traitement d'un rayonnement solaire prévus au niveau d'au moins une des toiles de l'ensemble des toiles 5, comme cela a été décrit précédemment.

D'autre part, le bâti 54 de l'élément de préhension 15 forme un cylindre comportant, ici, une première ouverture latérale 52 pour l'expulsion d'un volume d'air 53 du micro-compresseur 51. L'ouverture latérale du bâti est ici confondue sur les figures 3 et 4 avec la sortie d'air 52 du micro-compresseur. Les deux sorties sont conçues pour coopérer ou être en connexion fluidique l'une avec l'autre. En outre, il comporte une deuxième ouverture 57 confondue avec l'entrée de pompage 57 de l'air extérieur du micro-compresseur 51.

Dans ce qui précède, le micro-compresseur 51 de taille réduite est intégré dans l'élément de préhension 15 tel que représenté sur les figures 3, 4, 5 et 6. Selon un autre mode de réalisation, le micro-compresseur 51 est intégré dans l'arc rigide 101. Il peut être agencé par exemple dans la portion de l'arc entre l'extrémité inférieure et l'élément de préhension 15.

Le micro-compresseur 51 comporte une entrée d'air 57 permettant de pomper un volume d'air 56 et de le compresser pour qu'il soit injecté dans la partie gonflable du parapluie 1 selon l'invention, via la sortie d'air 52. Un volume d'air 53 permet alors de gonfler le parapluie 1 selon l'invention en un temps réduit.

Selon un autre mode de réalisation, le micro-compresseur 51 est jumelé avec une capsule d'air comprimé. Une interface entre le micro-compresseur 51 et la capsule permet d'activer la prise d'air de la capsule pour l'injecter dans la chambre à air, formée des arcs gonflables 10 et de la base 20. Selon un mode de réalisation, la capsule est amovible et interchangeable. Un compartiment, soit du bâti 54 de l'élément de préhension 15 soit de l'arc rigide 101, permet d'accéder à la capsule pour la changer une fois vide. Selon un autre mode de réalisation, la capsule peut être rechargée grâce à la fonction de pompage du micro-compresseur 51.

Le micro-compresseur 51 peut comprendre une commande d'activation permettant d'engager automatiquement le pompage, la compression et la génération d'un flux d'air 53. Selon un mode de réalisation, un bouton 55 permet d'engager la commande d'activation sur une simple pression du bouton.

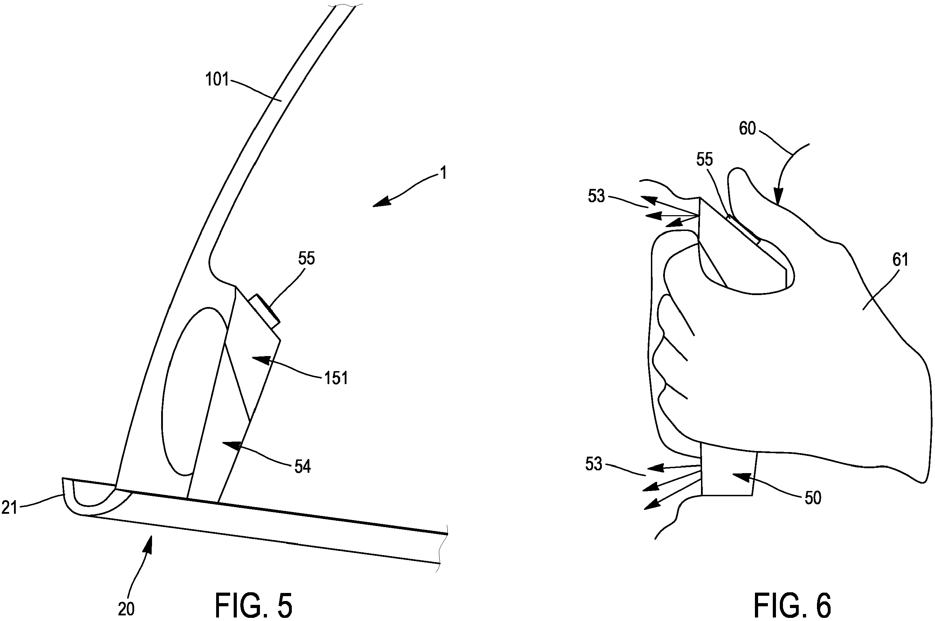

La figure 6 représente l'élément de préhension 15 tenu par une main 61. Un mouvement du pouce de la main 61 sur le bouton 55 engage la génération d'un flux d'air expulsé 53 du micro compresseur 51 vers la partie gonflable 10, 20 du parapluie 1 selon l'invention. Ici illustrées, deux sorties d'air permettent d'éjecter un volume d'air 53 dans la partie gonflable 10, 20 du parapluie 1 selon l'invention.

Selon un mode de réalisation, le bâti 54 comporte une partie supérieure comportant un bouton 55 pour activer le bouton du micro-compresseur 51. Selon un autre mode de réalisation, le bouton du micro-compresseur 51 coopère avec une ouverture du bâti 54 pour laisser apparent le bouton 55. Le bâti 54 comporte en outre au moins une première ouverture latérale 52 pour expulser l'air 53 pompé et compressé, et au moins une deuxième ouverture 57 pour pomper l'air ambiant 56. Les ouvertures du bâti 54 coopèrent avec celles du micro-compresseur 51.

Selon un autre mode de réalisation, lorsque le parapluie 1 selon l'invention comporte un arc rigide 101, il comporte au moins un bouton 55 ou un actionneur pour activer le micro-compresseur 51 afin d'engager le gonflage du parapluie 1. Selon un mode de réalisation, l'arc rigide 101 comporte au moins une ouverture pour le passage d'un bouton du micro-compresseur directement accessible sur ce dernier. L'arc rigide 101 comporte possiblement au moins une première ouverture latérale pour expulser l'air pompé et compressé dans la chambre à air 10, 20. Selon un mode de réalisation, au moins une seconde ouverture peut être prévue pour pomper l'air ambiant 56 lorsqu'aucune capsule n'est nécessaire. Dans le cas où une capsule est utilisée, le micro-compresseur est intégré dans l'arc rigide avec la capsule. L'actionneur engageant le gonflage entraine alors la prise d'air de la capsule par le micro-compresseur. Selon un mode de réalisation hybride, le micro-compresseur 51 comporte une entrée pour prélever l'air de la capsule et une entrée d'air pour prélever l'air ambiant.

Selon une variante de réalisation, le micro-compresseur comporte une électrovanne.

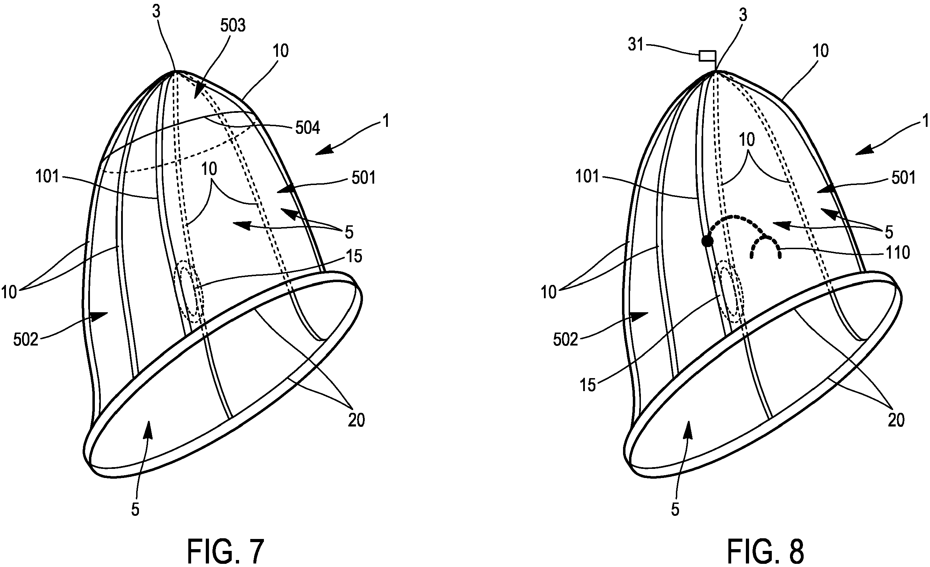

Illustré à la figure 8, un mode de réalisation du parapluie 1 selon l'invention comporte un moyen 110 pour porter en mains libres le parapluie en position ouverte. Cela permet à l'utilisateur du parapluie 1 selon l'invention de le porter tout en ayant les deux mains libres pour faire d'autres activités, tout en restant protégé par le parapluie 1 selon l'invention. Dans une forme de réalisation, le moyen 110 comporte un appui épaule qui est déployable en position d'utilisation et qui vient se positionner sur les épaules de l'utilisateur. A cette fin, cet appui épaule est monté à rotation au bout d'un bras sur l'arc rigide 101 du parapluie 1 selon l'invention. En cas de non utilisation, l'appui épaule est replié contre l'arc rigide 101 et peut y être escamoté.

Optionnellement, le parapluie 1 selon l'invention comporte un moyen de détection d'obstacle. Par exemple, ici illustré, le moyen de détection d'obstacle est une caméra 31 située au niveau du sommet 3 du parapluie 1 selon l'invention. En variante de réalisation, le moyen de détection d'obstacle peut être des capteurs/radars de proximité positionnés sur le parapluie 1 selon l'invention, par exemple sur le pourtour formé par l'armature circonférentielle 20 et/ou sur les arcs 10,101. Le moyen de détection d'obstacle comporte en outre une unité de traitement et d'avertissement reliée à la caméra 31 ou au capteurs/radars de proximité. Le moyen de détection d'obstacle est alimenté par une batterie rechargeable et/ou par les cellules photovoltaïques du film photovoltaïque formant les moyens de traitement d'un rayonnement solaire prévus au niveau d'au moins une des toiles de l'ensemble des toiles 5, comme cela a été décrit précédemment.

L'ensemble de l'invention a été illustré et décrit en regard d'un parapluie gonflable comme celui décrit dans le document FR 3051637. Toutefois, l'invention telle que revendiquée s'applique aussi à des parapluies traditionnels à armature mécanique pliable, comme une armature métallique. Elle s'applique aussi à des dispositifs assimilés comme des ombrelles.

Parmi les équipements électriques et/ou électroniques additionnels pouvant être intégrés au parapluie 1 selon l'invention, ce dernier comporte :
- une interface sans fil pour appairer un équipement électronique sans fil tel un téléphone portable, une tablette, un assistant personnel digital, ou tout autre équipement électronique assimilé. Ainsi par exemple, le parapluie 1 selon l'invention peut transmettre des paramètres d'état, comme un état gonflé/dégonflé, afin que l'équipement électronique active une fonction de transfert d'informations. Un mécanisme d'authentification peut être prévu.
- Une sortie audio et/ou une sortie d'images. La sortie d'images peut être un afficheur sous la forme d'un écran souple intégré sur une face interne de la toile globale du parapluie selon l'invention. En variante, l'afficheur est une portion de la toile globale rendue opaque et non transparente sur laquelle un projecteur affiche une image, le projecteur pouvant être intégré au parapluie 1 selon l'invention.
- Un dispositif de traitement de l'air contenu dans un volume interne délimité par la toile globale, le parapluie 1 selon l'invention étant en position ouverte. Le dispositif de traitement de l'air offrant des fonctions de filtration et/ou de thermorégulation et/ou de régulation d'une hydrométrie.
- Une ou plusieurs sources lumineuses, comme des diodes électroluminescentes.
- Etc...

De sorte à piloter les divers équipements électroniques et/ou électriques équipant le parapluie 1 selon l'invention, ce dernier comporte en outre une unité de traitement et de contrôle comportant un processeur connecté à une mémoire et mettant en oeuvre un logiciel de pilotage et de traitement pour remplir les différentes fonctions des équipements électroniques et/ou électriques.

De manière générale, les différents équipements électroniques et/ou électriques équipant le parapluie 1 selon l'invention, ainsi que l'unité de traitement et de contrôle sont alimentés par des batteries rechargeables prévues dans le parapluie 1 selon l'invention et/ou par les cellules photovoltaïques du film photovoltaïque formant les moyens de traitement d'un rayonnement solaire prévus au niveau d'au moins une des toiles de l'ensemble des toiles 5, comme cela a été décrit précédemment.

Bien entendu, il est possible d'apporter à l'invention de nombreuses modifications sans pour autant sortir du cadre de celle-ci.

## Revendications

1. Parapluie (1) comportant une armature (10,101,20), un ensemble de toiles (5) s'étendant sur l'armature, un moyen de préhension (15) pour porter le parapluie en position ouverte, **caractérisé en ce qu'**au moins une (501,502,503) des toiles de l'ensemble de toiles comporte des moyens de traitement d'un rayonnement solaire.

2. Parapluie selon la revendication 1, **caractérisé en ce que** les moyens de traitement d'un rayonnement solaire sont positionnés en sandwich entre deux films formant l'au moins une des toiles de l'ensemble de toiles.

3. Parapluie selon l'une des revendications 1 à 2, **caractérisé en ce que** les moyens de traitement d'un rayonnement solaire comprennent un film photochromique.

4. Parapluie selon la revendication 3, **caractérisé en ce que** le film photochromique est positionné au niveau d'une toile (501) située devant un utilisateur du parapluie.

5. Parapluie selon la revendication 3 ou 4, **caractérisé en ce que** le film photochromique est positionné au niveau d'une toile (503) formant un sommet du parapluie.

6. Parapluie selon la revendication 3, **caractérisé en ce que** le film photochromique est positionné au niveau de toutes les toiles formant l'ensemble de toiles.

7. Parapluie selon l'une des revendications 1 à 6, **caractérisé en ce que** les moyens de traitement d'un rayonnement solaire comprennent un film photovoltaïque.

8. Parapluie selon la revendication 7, **caractérisé en ce que** le film photovoltaïque est positionné au niveau d'une toile (502) située derrière un utilisateur du parapluie.

9. Parapluie selon la revendication 7 ou 8, **caractérisé en ce que** le film photovoltaïque est positionné au niveau d'une toile formant un sommet du parapluie.

10. Parapluie selon l'une des revendications 1 à 9, **caractérisé en ce qu'**il comporte un moyen pour porter en mains libres (110) le parapluie en position ouverte.

11. Parapluie selon la revendication 10, **caractérisé en ce que** le moyen pour porter en mains libres le parapluie comporte un appui épaule.

12. Parapluie selon l'une des revendications 1 à 11, **caractérisé en ce qu'**il comporte un moyen de détection d'obstacle (31).

13. Parapluie selon la revendication 12, **caractérisé en ce que** le moyen de détection d'obstacle est une caméra (31).

14. Parapluie selon l'une des revendications 1 à 13, **caractérisé en ce que** l'armature est une armature gonflable (10,20).

15. Parapluie selon la revendication 14, **caractérisé en ce qu'**il comporte un micro-compresseur (51) activable agencé de sorte à injecter un volume d'air dans l'armature gonflable.
